# EUROPÄISCHE PATENTSCHRIFT

(11) **EP 1 460 872 B1**
(45) Veröffentlichungstag und Bekanntmachung des Hinweises auf die Patenterteilung: **06.10.2004**
(21) Anmeldenummer: 03405204.3
(22) Anmeldetag: 25.03.2003
(51) Int. Cl.: H04Q 7/38, H04Q 7/32

(54) **Verfahren zum Selektieren eines Mobilfunknetzes und geeignetes Identifizierungsmodul**
Method for selecting a mobile network and identification module therefor
Procédé pour la sélection d'un réseau mobile et module d'identification associé

(43) Veröffentlichungstag der Anmeldung: 22.09.2004
(73) Patentinhaber: Swisscom Mobile AG, 3050 Bern (CH)
(72) Erfinder: Oswald, Rudolf, 3014 Bern (CH)
(74) Vertreter: BOVARD AG - Patentanwälte

(56) Entgegenhaltungen:
- US-A- 5 809 416
- US-A1- 2002 082 049
- US-A1- 2002 119 774
- US-A1- 2002 147 012
- "DIGITAL CELLULAR TELECOMMUNICATIONS SYSTEM (PHASE 2+);Functions related to Mobile Station (MS) in idle mode(GSM 03.22) ETSI" EUROPEAN TELECOMMUNICATION STANDARD, XX, XX, September 1996 (1996-09), Seiten 1-32, XP002173291

## Beschreibung

### Technisches Gebiet

Die vorliegende Erfindung betrifft ein Verfahren zum Selektieren eines Mobilfunknetzes und ein dafür geeignetes Identifizierungsmodul. Die Erfindung betrifft insbesondere ein Verfahren zum Selektieren eines Mobilfunknetzes in einer mobilen Vorrichtung und ein dafür geeignetes Identifizierungsmodul, wobei das Mobilfunknetz in der mobilen Vorrichtung basierend auf einer in der mobilen Vorrichtung gespeicherten Netzwerkidentifizierung selektiert wird.

### Stand der Technik

In Mobilfunknetzen für die mobile Daten- und Sprachkommunikation werden jeweils in den mobilen Kommunikationsendgeräten Informationen, insbesondere Netzwerkidentifizierungen mit Netzwerkidentifizierungselementen zur Identifizierung des Mobilfunknetzes gespeichert, in welchem das betreffende Kommunikationsendgerät zuletzt eingebucht war. Insbesondere in GSM-Mobilfunknetzen (Global System for Mobile Communication) werden Informationen über das Mobilfunknetz, in welchem das betreffende mobile Kommunikationsendgerät zuletzt eingebucht war, das so genannte Registered Public Land Mobile Network (RPLMN), als Aufenthaltsortinformationen, so genannte Location Information, in einem Identifizierungsmodul gespeichert, das entfembar mit dem mobilen Kommunikationsendgerät verbunden ist, wie in der Schrift "Digital cellular telecommunications system (Phase 2); Functions related to Mobile Station (MS) in idle mode (GSM 03.22)", ETS 300 535, September 1996, vom European Telecommunications Standards Institute (ETSI) spezifiziert wurde. Diese Identifizierungsmodule, so genannte Subscriber Identity Modules (SIM), sind als Chipkarten zur entfernbaren Verbindung mit den mobilen Kommunikationsendgeräten ausgeführt und dienen der Identifizierung und Authentifizierung von Teilnehmern in den Mobilfunknetzen. Für die Identifizierungsmodule der GSM-Mobilfunknetze sind elementare Dateien, so genannte Elementary Files (EF), insbesondere die so genannte "EF_{LOCI}"-Datei zur Speicherung der Aufenthaltsortinformationen definiert, welche eine Netzwerkidentifizierung mit Netzwerkidentifizierungselementen umfassen, nämlich ein Ländercode, der so genannte Mobile Country Code (MCC), und ein Netzwerkcode, der so genannte Mobile Network Code (MNC). Beim Einschalten des mobilen Kommunikationsendgeräts wird mit erster Priorität das Mobilfunknetz selektiert, das durch die im Identifizierungsmodul gespeicherten Aufenthaltsinformationen und der darin enthaltenen Netzwerkidentifizierung definiert ist. Dabei liest das mobile Kommunikationsendgerät die gespeicherten Aufenthaltsinformationen und versucht sich bei dem Mobilfunknetz einzubuchen, das durch die gelesenen Aufenthaltsinformationen und die darin enthaltene Netzwerkidentifizierung definiert ist.

Das obenstehend erläuterte standardgemässe Verfahren weist den Nachteil auf, dass sich ein mobiles Kommunikationsendgerät bei verfügbaren Roamingdiensten anstatt im Heimnetz, das so genannte Home Public Land Mobile Network (HPLMN), in einem fremden Mobilfunknetz einbucht, wenn das mobile Kommunikationsendgerät in seinem Heimnetz eingeschaltet wird, nachdem es zuvor das fremde Mobilfunknetz besucht hat, das so genannte Visited Public Land Mobile Network (VPLMN). Das mobile Kommunikationsendgerät bucht sich im fremden Mobilfunknetz ein, obwohl es sich im Heimnetz befindet, weil die im Identifizierungsmodul gespeicherten Aufenthaltsinformationen das vorher besuchte Mobilfunknetz definieren. Falls der Teilnehmer dies nicht bemerkt und manuell das Heimnetz selektiert, wird Kommunikationsverkehr unnötig über fremde Mobilfunknetze geleitet und dem Teilnehmer entstehen erhebliche unnötige Mehrkosten.

Ein weiterer Nachteil des standardgemässen Verfahrens wird bemerkbar, wenn sich der Teilnehmer mit seinem mobilen Kommunikationsendgerät in einem Funkloch seines Heimnetzes in Grenznähe zu einem fremden Land oder Staat befindet. Dann kann es nämlich vorkommen, dass sich das mobile Kommunikationsendgerät in ein ausländisches Mobilfunknetz einbucht, das dieses Funkloch abdeckt. Das mobile Kommunikationsendgerät bleibt nun so lange im ausländischen Mobilfunknetz eingebucht, bis es die Funkversorgung des ausländischen Mobilfunknetzes verlässt oder der Teilnehmer manuell ein anderes Mobilfunknetz selektiert, obwohl sich das mobile Kommunikationsendgerät nicht mehr im Funkloch des Heimnetzes befindet. Wiederum wird der Kommunikationsverkehr möglicherweise unnötig über fremde Mobilfunknetze geleitet und dem Teilnehmer können unnötige Mehrkosten entstehen.

In der Patentanmeldung US 2002/0082049 wird ein Verfahren zur Selektion eines Mobilfunknetzes in einem mobilen Kommunikationsendgerät beschrieben, in welchem beim Ein- und Ausschalten des mobilen Kommunikationsendgeräts auf Grund der im Identifizierungsmodul gespeicherten Aufenthaltsinformationen überprüft wird, ob zuletzt das Heimnetz oder ein bevorzugtes Netz verwendet wurde. Falls zuletzt nicht das Heimnetz oder ein bevorzugtes Netz verwendet wurde, werden die gespeicherten Aufenthaltsinformationen gelöscht, so dass beim Einschalten des mobilen Kommunikationsendgeräts das Heimnetz oder ein bevorzugtes Netz gesucht wird, weil im Identifizierungsmodul keine Aufenthaltsinformationen gespeichert sind. Gemäss US 2002/0082049 versucht sich das mobile Kommunikationsendgerät beim Einschalten in jedem Fall in ein bevorzugtes Mobilfunknetz einzubuchen, wodurch der Einbuchungsprozess beispielsweise im Ausland unnötig verlängert wird, wenn tatsächlich kein bevorzugtes Mobilfunknetz verfügbar ist und die gespeicherten Aufenthaltsinformationen das zuletzt verwendete verfügbare Mobilfunknetz definieren, in das sich das mobile Kommunikationsendgerät schlussendlich doch einbuchen wird. Überdies wird das Problem des oben beschriebenen Szenarios grenznaher Funklöcher durch das Verfahren gemäss US 2002/0082049 nicht vollständig gelöst. Bucht sich nämlich das mobile Kommunikationsendgerät in einem grenznahen Funkloch in ein ausländisches Mobilfunknetz ein, das im mobilen Kommunikationsendgerät als bevorzugtes Mobilfunknetz aufgeführt ist, bleibt das mobile Kommunikationsendgerät trotzdem so lange im ausländischen Mobilfunknetz eingebucht, bis es die Funkversorgung des ausländischen Mobilfunknetzes verlässt oder der Teilnehmer manuell ein anderes Mobilfunknetz selektiert, obwohl sich das mobile Kommunikationsendgerät nicht mehr im Funkloch des Heimnetzes befindet, wodurch der Kommunikationsverkehr möglicherweise wiederum unnötig über fremde Mobilfunknetze geleitet wird und dem Teilnehmer unnötige Zusatzkosten entstehen können.

### Darstellung der Erfindung

Es ist eine Aufgabe der vorliegenden Erfindung, ein neues Verfahren zum Selektieren eines Mobilfunknetzes in einer mobilen Vorrichtung und ein neues dazu geeignetes Identifizierungsmodul vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Das Mobilfunknetz wird in einer mobilen Vorrichtung, die für die Verwendung in Mobilfunknetzen eingerichtet ist, basierend auf einer in der mobilen Vorrichtung gespeicherten Netzwerkidentifizierung selektiert, welche das Mobilfunknetz identifiziert, in welchem die betreffende mobile Vorrichtung zuletzt eingebucht war.

Die oben genannten Ziele werden durch die vorliegende Erfindung insbesondere dadurch erreicht, dass die gespeicherte Netzwerkidentifizierung beim Einschalten der mobilen Vorrichtung mit in der mobilen Vorrichtung gespeicherten ersten Netzwerkidentifizierungselementen von benachbarten Mobilfunknetzen verglichen wird, die jeweils ein geografisches Gebiet abdecken, das an ein geografisches Gebiet angrenzt, das durch ein der mobilen Vorrichtung zugeordnetes Heimnetz abgedeckt wird. Vorzugsweise sind die ersten Netzwerkidentifizierungselemente, Ländercodes von Mobilfunknetzen, die jeweils ein Gebiet in einem Land oder in einem Staat abdecken, die an ein Gebiet eines Landes oder eines Staates angrenzen, das vom Heimnetz abgedeckt wird. Die oben genannten Ziele werden durch die vorliegende Erfindung zudem dadurch erreicht, dass bei einer aus dem Vergleich resultierenden Übereinstimmung, das heisst bei einer Übereinstimmung der gespeicherten Netzwerkidentifizierung mit dem/den gespeicherten ersten Netzwerkidentifizierungselement(en) eines benachbarten Mobilfunknetzes, die gespeicherte Netzwerkidentifizierung vor dem Selektieren des Mobilfunknetzes mit der Netzwerkidentifizierung des Heimnetzes überschrieben wird. Das heisst die gespeicherte Netzwerkidentifizierung, die das Mobilfunknetz identifiziert, in welchem die betreffende mobile Vorrichtung zuletzt eingebucht war, wird durch die Netzwerkidentifizierung des Heimnetzes der mobilen Vorrichtung überschrieben, wenn die gespeicherte Netzwerkidentifizierung ein Mobilfunknetz definiert, das in einem benachbarten geografischen Gebiet des Heimnetzes liegt. Dadurch wird verhindert, dass die mobile Vorrichtung, die sich in einem Funkloch seines Heimnetzes in Grenznähe zu einem benachbarten geografischen Gebiet, insbesondere ein benachbartes Land oder ein benachbarter Staat, in ein fremdes Mobilfunknetz eingebucht hat, beim Verlassen des Funklochs unnötigerweise im fremden Mobilfunknetz eingebucht bleibt, wenn die mobile Vorrichtung eingeschaltet wird. Durch die Beschränkung des Überschreibens der gespeicherten Netzwerkidentifizierung auf Fälle, in denen sich die mobile Vorrichtung in ein benachbartes Mobilfunknetz in der geografischen Nachbarschaft des Heimnetzes eingebucht hat, wird erreicht, dass der Einbuchungsprozess typischerweise höchstens in benachbarten Mobilfunknetzen unnötig verlängert wird. Zudem wird sichergestellt, dass nach Besuchen in geografisch benachbarten Mobilfunknetzen beim Einschalten immer automatisch die Verfügbarkeit des Heimnetzes überprüft wird, in das sich die mobile Vorrichtung bevorzugt einbucht.

In einer Ausführungsvariante wird vor dem Überschreiben der Netzwerkidentifizierung überprüft, ob die gespeicherte Netzwerkidentifizierung mit zweiten Netzwerkidentifizierungselementen von bevorzugten Mobilfunknetzen übereinstimmt, und bei einer Übereinstimmung wird die gespeicherte Netzwerkidentifizierung nicht wie oben erläutert überschrieben. Dadurch kann gewährt werden, dass der Einbuchungsprozess in ein bevorzugtes Mobilfunknetz, für das dem Teilnehmer beispielsweise ähnliche oder gleiche Kommunikationstarife verrechnet werden wie im Heimnetz, nicht unnötig verlängert wird.

Vorzugsweise wird die Netzwerkidentifizierung in einem mit der mobilen Vorrichtung entfernbar verbundenen Identifizierungsmodul gespeichert, welches für die Teilnehmeridentifizierung in den Mobilfunknetzen verwendet wird, und das Vergleichen und das Überschreiben der gespeicherten Netzwerkidentifizierung wird auf einem Prozessor des Identifizierungsmoduls ausgeführt. Durch die Ausführung der oben beschriebenen Schritte des Vergleichs, des Überschreibens und gegebenenfalls der Überprüfung durch Programmmittel, die in einem Speicher des Identifizierungsmoduls gespeichert sind und einen Prozessor des Identifizierungsmoduls steuern, wird ermöglicht, bereits vorhandene mobile Vorrichtungen ohne weitere Änderungen an der mobilen Vorrichtung durch Einführen des entsprechend angepassten ldentifizierungsmoduls mit der für die Ausführung des Verfahrens benötigten Funktionalität zu erweitern.

Die mobile Vorrichtung ist vorzugsweise ein mobiles Kommunikationsendgerät, welches für die Kommunikation in den Mobilfunknetzen verwendet wird.

In einer alternativen Ausführungsvariante wird das mobile Kommunikationsendgerät als mobile Vorrichtung zur Verfahrensausführung verwendet, das heisst die oben beschriebenen Schritte des Vergleichs, des Überschreibens und gegebenenfalls der Überprüfung wird durch Programmmittel ausgeführt, die in einem festen Speicher des mobilen Kommunikationsendgeräts gespeichert sind und einen festen Prozessor des mobilen Kommunikationsendgeräts steuern.

Neben einem Verfahren zum Selektieren eines Mobilfunknetzes in einer mobilen Vorrichtung betrifft die vorliegende Erfindung auch ein Identifizierungsmodul, das entfernbar mit einer in Mobilfunknetzen verwendbaren mobilen Vorrichtung verbindbar ist und zur Teilnehmeridentifizierung in den Mobilfunknetzen dient. Das Identifizierungsmodul umfasst einen Speicher zur Speicherung der Netzwerkidentifizierung, die das Mobilfunknetz identifiziert, in welchem die mit dem Identifizierungsmodul verbundene mobile Vorrichtung zuletzt eingebucht war, und es umfasst einen Prozessor und Programmmittel zur Ausführung der oben beschriebenen Schritte des Vergleichs, des Überschreibens und gegebenenfalls der Überprüfung.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Flussdiagramm, welches schematisch den Ablauf des Verfahrens zum Selektieren eines Mobilfunknetzes in einer mobilen Vorrichtung illustriert.
Figur 2 zeigt ein Blockdiagramm, welches schematisch eine mobile Vorrichtung für die Verwendung in Mobilfunknetzen illustriert, die eingerichtet ist eines der Mobilfunknetze basierend auf einer gespeicherten Netzwerkidentifizierung zu selektieren.

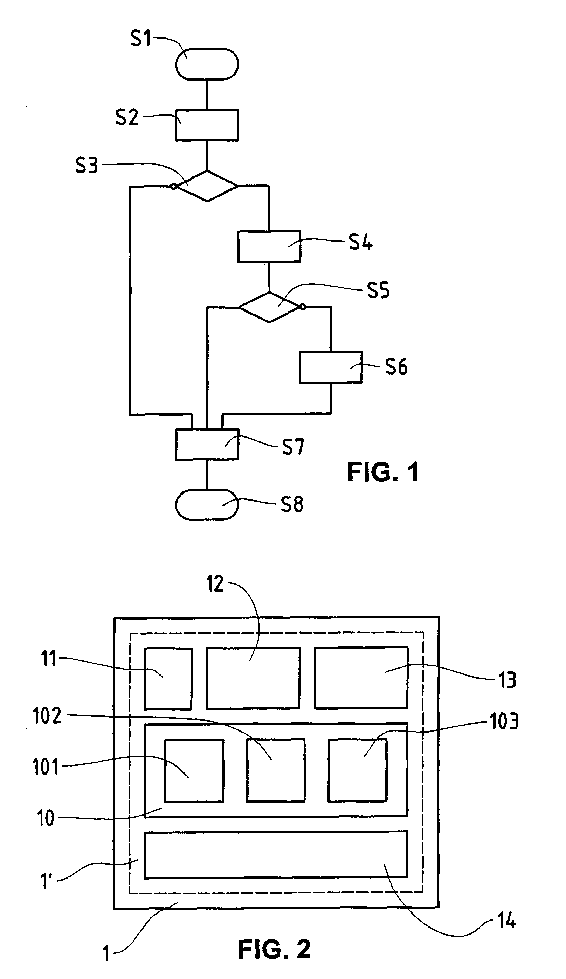

In der Figur 2 bezeichnet das Bezugszeichen 1 eine mobile Vorrichtung für die Verwendung in Mobilfunknetzen, beispielsweise GSM- oder UMTS-Mobilfunknetze. Die mobile Vorrichtung 1 ist vorzugsweise ein mobiles Kommunikationsendgerät für die Kommunikation in den Mobilfunknetzen, beispielsweise ein Mobilfunktelefon oder ein Laptop- oder PDA-Computer (Personal Data Assistant). Die mobile Vorrichtung 1 ist entfernbar mit einem Identifizierungsmodul 1' zur Teilnehmeridentifizierung in den Mobilfunknetzen verbunden. Das Identifizierungsmodul 1' ist vorzugsweise eine SIM-Karte und ist über Kontaktelemente entfernbar mit der mobilen Vorrichtung 1 verbunden.

Die mobile Vorrichtung 1 umfasst einen Prozessor 14 zur Ausführung von Programmmitteln 10, die in der mobilen Vorrichtung 1 gespeichert sind. Die Programmmittel 10 umfassen programmierte Softwaremodule mit Programmmitteln 101, 102, 103 zur Ausführung von verschiedenen Funktionen, die später mit Bezug auf die Figur 1 beschrieben werden. Wie in der Figur 2 schematisch gezeigt wird, sind der Prozessor 14 und die Programmmittel 10 vorzugsweise auf dem ldentifizierungsmodul 1' ausgeführt.

Die mobile Vorrichtung 1 umfasst einen Speicher 11 mit darin gespeicherten Aufenthaltsortinformationen, so genannte Location Information, die das Mobilfunknetz identifizieren, in welchem die mobile Vorrichtung 1 zuletzt eingebucht war, das so genannte Registered Public Land Mobile Network (RPLMN). Die gespeicherten Aufenthaltsinformationen umfassen insbesondere auch eine Netzwerkidentifizierung mit einem Ländercode, dem so genannten Mobile Country Code (MCC), und einem Netzwerkcode, dem so genannten Mobile Network Code (MNC), des RPLMN. Wie in der Figur 2 schematisch gezeigt wird, ist der Speicher 11 vorzugsweise auf dem Identifizierungsmodul 1' ausgeführt.

Die mobile Vorrichtung 1 umfasst einen Speicher 12 mit darin gespeicherten Netzwerkidentifizierungselementen, die Ländercodes (MCC) und Netzwerkcodes (MNC) umfassen, von benachbarten Mobilfunknetzen, die jeweils ein geografisches Gebiet abdecken, das an ein geografisches Gebiet angrenzt, das durch ein der mobilen Vorrichtung 1 zugeordnetes Heimnetz abgedeckt wird. Die im Speicher 12 gespeicherten Netzwerkidentifizierungselemente umfassen vorzugsweise die Ländercodes (MCC) der Mobilfunknetze von benachbarten Ländern oder Staaten, das heisst von geografischen Gebieten, die durch Landes- und/oder Staatsgrenzen definiert sind. Wie in der Figur 2 schematisch gezeigt wird, ist der Speicher 12 vorzugsweise auf dem Identifizierungsmodul 1' ausgeführt.

Die mobile Vorrichtung 1 umfasst optional einen Speicher 13 mit darin gespeicherten Netzwerkidentifizierungselementen, die Ländercodes (MCC) und Netzwerkcodes (MNC) umfassen, von bevorzugten Mobilfunknetzen, mit denen beispielsweise der Betreiber des der mobilen Vorrichtung 1 zugeordneten Heimnetzes oder der Benutzer der mobilen Vorrichtung 1 ein günstiges Verrechnungsabkommen hat. Wie in der Figur 2 schematisch gezeigt wird, ist der Speicher 13 vorzugsweise auf dem ldentifizierungsmodul 1' ausgeführt.

Nachfolgend wird der Ablauf des Verfahrens zum Selektieren eines Mobilfunknetzes in der mobilen Vorrichtung 1 sowie die dabei von den Programmmitteln 101, 102, 103 ausgeführten Funktionen mit Bezug auf Figur 1 beschrieben.

Im Schritt S1 wird die mobile Vorrichtung 1 eingeschaltet, wobei die mobile Vorrichtung 1 und das entfernbar mit der mobilen Vorrichtung 1 verbundene ldentifizierungsmodul 1' aktiviert und mit Strom versorgt werden.

Im Schritt S2 wird die im Speicher 11 gespeicherte Netzwerkidentifizierung des RPLMN durch die Programmmittel 101 mit den im Speicher 12 gespeicherten Netzwerkidentifizierungselementen von benachbarten Mobilfunknetzen verglichen.

Im Schritt S3 untersuchen die Programmmittel 102, ob aus dem im Schritt S2 durchgeführten Vergleich eine Übereinstimmung resultierte, das heisst, ob der im Speicher 11 gespeicherte Ländercode (MCC) des RPLMN mit einem der im Speicher 12 gespeicherten Ländercodes (MCC) benachbarter Mobilfunknetze übereinstimmt. In der Ausführungsvariante, in der benachbarte geografische Gebiete innerhalb von Ländern oder Staaten untersucht werden, liegt eine Übereinstimmung vor, wenn der Ländercode (MCC) und der Netzwerkcode (MNC) der im Speicher 11 gespeicherten Netzwerkidentifizierung mit den Netzwerkidentifizierungselementen, das heisst mit dem Ländercode (MCC) und dem Netzwerkcode (MNC), eines benachbarten Mobilfunknetzes übereinstimmen. Falls keine Übereinstimmung resultierte, das heisst, falls die mobile Vorrichtung 1 zuletzt nicht in einem benachbarten Mobilfunknetz eingebucht war, fährt das Verfahren im Schritt S7 fort. Falls eine Übereinstimmung resultierte, das heisst, falls die mobile Vorrichtung 1 zuletzt in einem benachbarten Mobilfunknetz eingebucht war, fährt das Verfahren mit den optionalen Schritten S4 und S5 oder direkt mit dem Schritt S6 fort.

Im Schritt S4 wird durch die Programmmittel 103 überprüft, ob die im Speicher 11 gespeicherte Netzwerkidentifizierung des RPLMN mit Netzwerkidentifizierungselementen bevorzugter Mobilfunknetze übereinstimmt, die im Speicher 13 gespeichert sind. Das heisst, es wird überprüft, ob der Ländercode (MCC) und der Netzwerkcode (MNC) der im Speicher 11 gespeicherten Netzwerkidentifizierung mit dem Ländercode (MCC) und dem Netzwerkcode (MNC) eines bevorzugten Mobilfunknetzes übereinstimmt.

Im Schritt S5 untersuchen die Programmmittel 103, ob aus der im Schritt S4 durchgeführten Überprüfung eine Übereinstimmung resultierte. Falls eine Übereinstimmung resultierte, das heisst, falls die mobile Vorrichtung 1 zuletzt in einem bevorzugten Mobilfunknetz eingebucht war, fährt das Verfahren im Schritt S7 fort. Falls keine Übereinstimmung resultierte, das heisst, falls die mobile Vorrichtung 1 zuletzt in einem nicht bevorzugten, benachbarten Mobilfunknetz eingebucht war, fährt das Verfahren mit dem Schritt S6 fort.

Im Schritt S6 überschreiben die Programmmittel 102 die im Speicher 11 gespeicherte Netzwerkidentifizierung des RPLMN durch die Netzwerkidentifizierung des Heimnetzes, das der mobilen Vorrichtung 1, respektive dem Identifizierungselement 1', zugeordnet ist. Die Netzwerkidentifizierung des Heimnetzes, das heisst der Ländercode (MCC) und der Netzwerkcode (MNC) des Heimnetzes, wird dabei aus dem Identifizierungsmodul 1', insbesondere aus der dort gespeicherten Teilnehmeridentifizierung, der so genannten International Mobile Subscriber Identity (IMSI), oder aus einem Speicher der mobilen Vorrichtung 1 bezogen.

Im Schritt S7 selektiert die mobile Vorrichtung 1 das Mobilfunknetz, das durch die im Speicher 11 gespeicherte Netzwerkidentifizierung definiert ist.

Im Schritt S8 endet das Verfahren zum Selektieren des Mobilfunknetzes durch Einbuchen der mobilen Vorrichtung 1 im Mobilfunknetz, das im Schritt S7 selektiert wurde.

## Patentansprüche

1. Verfahren zum Selektieren eines Mobilfunknetzes in einer mobilen Vorrichtung (1), in welchem Verfahren das Mobilfunknetz in der mobilen Vorrichtung (1) basierend auf einer in der mobilen Vorrichtung (1) gespeicherten Netzwerkidentifizierung selektiert (S7) wird, welche gespeicherte Netzwerkidentifizierung das Mobilfunknetz identifiziert, in welchem die mobile Vorrichtung zuletzt eingebucht war, **gekennzeichnet durch**
Vergleichen (S2) der gespeicherten Netzwerkidentifizierung beim Einschalten (S1) der mobilen Vorrichtung (1) mit in der mobilen Vorrichtung (1) gespeicherten ersten Netzwerkidentifizierungselementen von benachbarten Mobilfunknetzen, die jeweils ein geografisches Gebiet abdecken, das an ein geografisches Gebiet angrenzt, das **durch** ein der mobilen Vorrichtung (1) zugeordnetes Heimnetz abgedeckt wird,
Überschreiben (S6) der gespeicherten Netzwerkidentifizierung mit der Netzwerkidentifizierung des genannten Heimnetzes vor dem Selektieren des Mobilfunknetzes bei einer aus dem Vergleich (S2) resultierenden Übereinstimmung (S3).

2. Verfahren nach Anspruch 1, **dadurch gekennzeichnet, dass** Ländercodes von Mobilfunknetzen, die jeweils ein Gebiet in einem Land oder in einem Staat abdecken, die an ein Gebiet eines Landes oder eines Staates angrenzen, das vom genannten Heimnetz abgedeckt wird, als erste Netzwerkidentifizierungselemente gespeichert werden.

3. Verfahren nach einem der Ansprüche 1 oder 2, **dadurch gekennzeichnet, dass** vor dem Überschreiben (S6) überprüft (S4) wird, ob die gespeicherte Netzwerkidentifizierung mit zweiten Netzwerkidentifizierungselementen, die einen Ländercode und einen Netzwerkcode umfassen, von bevorzugten Mobilfunknetzen übereinstimmt, und dass bei einer aus der Überprüfung (S4) resultierenden Übereinstimmung (S5) die gespeicherte Netzwerkidentifizierung nicht überschrieben wird.

4. Verfahren nach einem der Ansprüche 1 bis 3, **dadurch gekennzeichnet, dass** die Netzwerkidentifizierung in der mobilen Vorrichtung (1) in einem Speicher (11) gespeichert ist, der auf einem mit der mobilen Vorrichtung (1) entfernbar verbundenen ldentifizierungsmodul (1') ausgeführt ist, welches für die Teilnehmeridentifizierung in den Mobilfunknetzen verwendet wird, und dass das Vergleichen (S2) und das Überschreiben (S6) der gespeicherten Netzwerkidentifizierung auf einem Prozessor (14) des Identifizierungsmoduls ausgeführt wird.

5. Verfahren nach einem der Ansprüche 1 bis 4, **dadurch gekennzeichnet, dass** ein mobiles Kommunikationsendgerät als mobile Vorrichtung (1) verwendet wird, welches für die Kommunikation in den Mobilfunknetzen verwendet wird.

6. Identifizierungsmodul (1'), welches einen Prozessor (14) zur Ausführung von Programmmitteln (10) umfasst, welches einen ersten Speicher (11) mit einer darin gespeicherten Netzwerkidentifizierung umfasst und welches eingerichtet ist für die entfernbare Verbindung mit einer in Mobilfunknetzen verwendbaren mobilen Vorrichtung (1), welche mobile Vorrichtung (1) eingerichtet ist, basierend auf der gespeicherten Netzwerkidentifizierung eines der Mobilfunknetze zu selektieren, wobei die gespeicherte Netzwerkidentifizierung das Mobilfunknetz identifiziert, in welchem die mobile Vorrichtung zuletzt eingebucht war, **gekennzeichnet durch**
einen zweiten Speicher (12) mit darin gespeicherten ersten Netzwerkidentifizierungselementen von benachbarten Mobilfunknetzen, die jeweils ein geografisches Gebiet abdecken, das an ein geografisches Gebiet angrenzt, das **durch** ein dem Identifizierungsmodul (1') zugeordnetes Heimnetz abgedeckt wird,
erste Programmmittel (101) zum Vergleichen der gespeicherten Netzwerkidentifizierung mit den gespeicherten ersten Netzwerkidentifizierungselementen beim Einschalten der mit dem Identifizierungsmodul (1') verbundenen mobilen Vorrichtung (1),
zweite Programmmittel (102) zum Überschreiben der gespeicherten Netzwerkidentifizierung mit der Netzwerkidentifizierung des genannten Heimnetzes vor dem Selektieren des Mobilfunknetzes bei einer aus dem Vergleich resultierenden Übereinstimmung.

7. Identifizierungsmodul (1') nach Anspruch 6, **dadurch gekennzeichnet, dass** im zweiten Speicher (12) Ländercodes von Mobilfunknetzen, die jeweils ein Gebiet in einem Land oder in einem Staat abdecken, die an ein Gebiet eines Landes oder eines Staates angrenzen, das vom genannten Heimnetz abgedeckt wird, als erste Netzwerkidentifizierungselemente gespeichert sind.

8. Identifizierungsmodul (1') nach einem der Ansprüche 6 oder 7, **dadurch gekennzeichnet, dass** sie einen dritten Speicher (13) mit darin gespeicherten zweiten Netzwerkidentifizierungselementen, die einen Ländercode und einen Netzwerkcode umfassen, von bevorzugten Mobilfunknetzen umfasst, und dass sie dritte Programmmittel (103) umfasst, zum Überprüfen vor dem Überschreiben, ob die gespeicherte Netzwerkidentifizierung mit gespeicherten zweiten Netzwerkidentifizierungselementen übereinstimmt, und zum Verhindern, dass bei einer aus der Überprüfung resultierenden Übereinstimmung die gespeicherte erste Netzwerkidentifizierung überschrieben wird.

## Claims

1. Method for selecting a mobile radio network in a mobile device (1), in which method the mobile radio network is selected (S7) in the mobile device (1) based on a network identification stored in the mobile device (1), which stored network identification identifies the mobile radio network in which the mobile device was last registered, **characterised by**
comparing (S2) the stored network identification, when switching on (S1) of the mobile device (1), with first network identification elements, stored in the mobile device (1), of adjacent mobile radio networks each covering a geographic area bordering on a geographic area covered by a home network assigned to the mobile device (1),
overwriting (S6) the stored network identification with the network identification of said home network before selecting the mobile radio network in the case of a match (S3) resulting from the comparison (S2).

2. Method according to claim 1, **characterised in that** country codes of mobile radio networks covering respectively an area in a country or in a state bordering on an area of a country or a state covered by said home network are stored as first network identification elements.

3. Method according to one of the claims 1 or 2, **characterised in that** before overwriting (S6) it is checked (S4) whether the stored network identification coincides with second network identification elements, comprising a country code and a network code, of preferred mobile radio networks, and **in that** in the case of a match (S5) resulting from this check (S4) the stored network identification is not overwritten.

4. Method according to one of the claims 1 to 3, **characterised in that** the network identification is stored in the mobile device (1) in a memory (11) which is implemented on an identification module (1') removably connected to the mobile device (1), which module is used for subscriber identification in the mobile radio networks, and **in that** the comparison (S2) and the overwriting (S6) of the stored network identification is executed on a processor (14) of the identification module.

5. Method according to one of the claims 1 to 4, **characterised in that** a mobile communication terminal used for communication in the mobile radio networks is used as the mobile device (1).

6. Identification module (1') comprising a processor (14) for execution of program means (10), which identification module comprises a first memory (11) with a network identification stored therein, and which is set up for removable connection to a mobile device (1) usable in mobile radio networks, which mobile device (1) is set up to select one of the mobile radio networks, based on the stored network identification, the stored network identification identifying the mobile radio network in which the mobile device was last registered, **characterised by**
a second memory (12) with first network identification elements, stored therein, of adjacent mobile radio networks each covering a geographic area bordering on a geographic area covered by a home network assigned to the identification module (1'),
first program means (101) for comparing the stored network identification with the stored first network identification elements, when switching on the mobile device (1) connected to the identification module (1'),
second program means (102) for overwriting the stored network identification with the network identification of said home network before selecting the mobile radio network in the case of a match resulting from the comparison.

7. Identification module (1') according to claim 6, **characterised in that** stored as first network identification elements in the second memory (12) are country codes of mobile radio networks each covering an area in a country or in a state bordering on an area of a country or of a state covered by said home network.

8. Identification module (1') according to one of the claims 6 or 7, **characterised in that** it comprises a third memory (13) with second network identification elements stored therein, comprising a country code and a network code, of preferred mobile radio networks, and **in that** it comprises third program means (103) for checking, prior to overwriting, whether the stored network identification coincides with stored second network identification elements, and for preventing the stored first network identification from being overwritten in the case of a match resulting from the check.

## Revendications

1. Procédé pour la sélection d'un réseau de radiotéléphonie mobile dans un dispositif mobile (1), procédé dans lequel le réseau de radiotéléphonie mobile est sélectionné (S7) dans le dispositif mobile (1) en se basant sur une identification de réseau stockée dans le dispositif mobile (1), identification de réseau stockée qui identifie le réseau de radiotéléphonie mobile dans lequel a été enregistré en dernier le dispositif mobile, **caractérisé par**
La comparaison (S2) de l'identification de réseau mémorisée par mise en route (S1) du dispositif mobile (1) avec des premiers éléments d'identification de réseau stockés dans le dispositif mobile (1) de réseaux voisins de radiotéléphonie mobile qui couvrent respectivement une région géographique qui est attenante à une région géographique qui est couverte par un réseau domestique associé au dispositif mobile (1),
L'écrasement (S6) de l'identification de réseau mémorisée par l'identification de réseau dudit réseau domestique avant la sélection du réseau de radiotéléphonie mobile lors d'une concordance (S3) résultant de la comparaison (S2).

2. Procédé selon la revendication 1, **caractérisé en ce que** des codes de pays de réseaux de radiotéléphonie mobile qui couvrent respectivement une région, un pays ou un état qui touchent une région d'un pays ou d'un état qui est couverte par le réseau domestique sont mémorisés comme premiers éléments d'identification de réseau.

3. Procédé selon l'une des revendications 1 ou 2, **caractérisé en ce qu'**avant l'écrasement (S6), il est vérifié (S4) si l'identification de réseau mémorisée coïncide avec des seconds éléments d'identification de réseau qui comportent un code de pays ou un code de réseau associs à des réseaux de radiotéléphonie mobile préférés et **en ce que** lors d'une concordance (S5) résultant de la vérification (S4), l'identification de réseau mémorisée n'est pas écrasée.

4. Procédé selon l'une des revendications 1 à 3, **caractérisé en ce que** l'identification de réseau est mémorisée dans une mémoire (11) du dispositif mobile (1), mémoire qui est réalisé sur un module d'identification (1') relié de manière amovible au dispositif mobile (1), lequel est utilisé pour l'identification d'abonnés dans les réseaux de radiotéléphonie mobile et **en ce que** la comparaison (S2) et l'écrasement (S6) de l'identification de réseau mémorisée sont exécutés sur un processeur (14) du module d'identification.

5. Procédé selon l'une des revendications 1 à 4, **caractérisé en ce qu'**un terminal de communication mobile est utilisé en tant que dispositif mobile (1) lequel est utilisé pour la communication dans les réseaux de radiotéléphonie mobile.

6. Module d'identification (1'), qui comprend un processeur (14) pour l'exécution de moyens de programme (10), lequel comprend une première mémoire avec une identification de réseau mémorisée et lequel est agencé pour la liaison amovible à un dispositif mobile (1) utilisable dans des réseaux de radiotéléphonie mobile, dispositif mobile (1) qui est agencé de manière à sélectionner l'un des réseaux de radiotéléphonie mobile en se basant sur l'identification de réseau mémorisée, l'identification de réseau identifie le réseau de radiotéléphonie mobile dans lequel le dispositif mobile s'est connecté en dernier, **caractérisé par**
une seconde mémoire (12) contenant des premiers éléments d'identification de réseau mémorisés de réseaux de radiotéléphonie mobile voisins qui couvrent respectivement une région géographique qui est attenante à une région géographique qui est couverte par un réseau domestique associé au module d'identification (1'),
des premiers moyens de programme (101) pour la comparaison de l'identification de réseau mémorisée avec les premiers éléments d'identification de réseau mémorisés lors de la mise en route du dispositif mobile (1) relié au module d'identification (1'),
des seconds moyens de programme (102) pour l'écrasement de l'identification de réseau mémorisée dudit réseau domestique avant la sélection du réseau de radiotéléphonie mobile lors d'une correspondance résultant de la comparaison.

7. Module d'identification (1') selon la revendication 6, **caractérisé en ce que** dans la seconde mémoire (12) des codes de pays de réseaux de radiotéléphonie mobile qui couvrent respectivement une région, un pays ou un état qui touchent une région d'un pays ou d'un état qui est couvert par ledit réseau domestique sont mémorisés comme premiers éléments d'identification de réseau.

8. Module d'identification (1') selon l'une des revendications 6 ou 7, **caractérisé en ce qu'**il comprend une troisième mémoire (13) avec des seconds éléments d'identification de réseau mémorisés qui comportent un code de pays et un code de réseau associés aux réseaux de radiotéléphonie mobile préférés et **en ce qu'**il comprend des troisièmes moyens de programme (103), pour vérifier avant son écrasement si l'identification de réseau mémorisée coïncide avec des seconds éléments d'identification de réseau et pour empêcher l'écrasement de la première identification de réseau mémorisée lors d'une correspondance résultant de la vérification.
